## Europäisches Patentamt

## European Patent Office

## Office européen des brevets

(19)

(11) Veröffentlichungsnummer: **0 000 189**
B2

(12)
# NEUE EUROPÄISCHE PATENTSCHRIFT

(45) Veröffentlichungstag der neuen Patentschrift:
22.03.89

(51) Int. Cl.⁴: **F 28 F 9/16**, B 29 C 45/00

(21) Anmeldenummer: 78100228.2

(22) Anmeldetag: 23.06.78

(54) Wärmetauscher mit Wasserkästen aus Kunststoff und Wasserrohren aus Metall und Verfahren zu seiner Herstellung.

(30) Priorität: 27.06.77 DE 2728827

(43) Veröffentlichungstag der Anmeldung:
10.01.79 Patentblatt 79/1

(45) Bekanntmachung des Hinweises auf die Patenterteilung:
03.09.80 Patentblatt 80/18

(45) Bekanntmachung des Hinweises auf die Entscheidung
über den Einspruch:
22.03.89 Patentblatt 89/12

(84) Benannte Vertragsstaaten:
BE DE FR GB SE

(56) Entgegenhaltungen:
AT-A- 327 449
DE-A- 2 161 279
DE-A- 2 302 769
DE-A- 2 302 770
DE-A- 2 363 992
DE-A- 2 509 717
DE-C- 823 191
FR-A- 1 397 694
FR-A- 1 530 654
FR-A- 1 551 137
FR-A- 1 577 223
FR-A- 2 261 493
FR-A- 2 267 868

(73) Patentinhaber: FORD-WERKE AKTIENGESELLSCHAFT,
Ottoplatz 2 Postfach 21 03 69, D-5000 Köln 21 (DE)

(72) Erfinder: Haesters, Hermann, Ostring 37, D5024 Pulheim
(DE)
Erfinder: Lorenz, Siegfried., Halfmannstrasse 44,
D-5020 Frechen-Hüchelen (DE)
Erfinder: Altdorf, Erich, Am Wolfsgarten 12,
D-5000 Köln 90 (DE)
Erfinder: Forsting, Bernd, Uhlandstrasse 27,
D-4070 Rheydt 4 (DE)

(74) Vertreter: Ritzkowsky, Harald, Dipl.-Ing. et al,
Ford-Werke Aktiengesellschaft Patentabteilung
Z/DRR-2 Ottoplatz 2, D-5000 Köln 21 (DE)

(56) Entgegenhaltungen: (Fortsetzung)
GB-A- 268 093
GB-A- 1 273 141
US-A- 1 822 715
US-A- 3 438 432

Revue AUTOMOBILE ENGINEER, Juli 1971, Seite 45

EP 0 000 189 B2

ACTORUM AG

## Beschreibung

Die Erfindung bezieht sich auf Wärmetauscher, insbesondere für Kraftfahrzeuge, mit einem in einen Vor- und Rücklaufraum unterteilten, einstückigen Anschlusswasserkasten und einem einstückigen Umlenkwasserkasten aus Kunststoff, die über ein von Luftleitlamellen zusammengehaltenes Rohrbündel von Wasserrohren aus Metall miteinander verbunden sind, deren Rohrenden über ein in die Rohröffnungen erweiternde rillenförmige Vertiefungen an der Aussenseite der Böden der Wasserkästen eingebrachtes, aushärtendes Kunststoffmaterial abgedichtet befestigt sind.

Wärmetauscher der eingangs genannten Art sind bereits aus der DE-A 23 02 769 und DE-A 23 02 770 bekannt.

Entsprechend einer Ausführungsform eines solchen Wärmetauschers werden einstückige Anschluss- und Umlenkwasserkästen aus Kunststoff verwendet, die, um die Rohrenden über ein in die Rohröffnungen erweiternde rillenförmige Vertiefungen an den Aussenseiten der Böden der Wasserkästen eingebrachtes, aushärtendes Kunststoffmaterial abgedichtet befestigen zu können, mit diese Vertiefungen entsprechend ergänzenden Bodendeckeln versehen werden müssen. Diese Bodendeckel müssen gegenüber den Wasserkästen in geeigneter Weise fixiert werden, damit nach dem Einsetzen der Rohrenden des Rohrbündels in die Rohröffnungen und dem nachfolgenden Einspritzen von aushärtendem Kunststoffmaterial in die geschlossenen, rillenförmigen Vertiefungen ein unkontrolliertes Austreten des Kunststoffmaterials vermieden wird.

Diese Ausführungsform eines bekannten Wärmetauschers weist somit den Nachteil auf, dass für die notwendigen Bodendeckel ein zusätzlicher Werkzeug-, Material- und Montageaufwand erforderlich ist.

Entsprechend einer alternativ vorgeschlagenen Ausführungsform eines solchen Wärmetauschers werden Wasserkästen verwendet, die entlang einer die Rohröffnungen beinhaltenden, vertikalen wellenförmigen Schnittfläche geteilt sind. Die Schnittfläche ist hierbei in Höhe der Rohröffnungen wieder mit rillenförmigen Vertiefungen versehen, die nach Aneinanderfügen der beiden Wasserkästenteile wieder die Rohröffnungen erweiternde rillenförmige Vertiefungen bilden, in die nach Einsetzen der Rohrenden in die Rohröffnungen ein aushärtendes Kunststoffmaterial eingespritzt wird.

Diese Ausführungsform eines bekannten Wärmetauschers vermeidet zwar einen erhöhten Materialaufwand, macht jedoch einen erhöhten Werkzeugaufwand für die geteilten Wasserkästen erforderlich. Darüberhinaus muss die über den gesamten Umfang der Wasserkästen verlaufende Schnittfläche über das aushärtende Kunststoffmaterial abgedichtet werden, woraus sich einerseits ein hoher Materialaufwand an aushärtendem Kunststoffmaterial ergibt und andererseits durch die grosse Länge dieser Abdichtungsfuge die Wahrscheinlichkeit möglicher Undichtigkeiten stark erhöht wird.

Ergänzend wird noch darauf hingewiesen, dass es bei den Wärmetauschern der bekannten herkömmlichen Bauart, bei denen die Rohrenden eines Rohrbündels von Wasserrohren in einem Rohrboden über entsprechende Dichtungsmittel abgedichtet befestigt werden, bereits bekannt ist, diese Dichtungsmittel in Form eines aushärtenden Kunststoffmaterials anzubringen. Eine solche Ausführungsform eines bekannten Wärmetauschers ist aus der DE-A 25 09 717 zu entnehmen, wobei die hier aufgezeigten Kleber bzw. aushärtbaren Kunststoffmaterialien in sehr aufwendiger Weise über eine Formvorrichtung auf den Rohrboden aufgebracht werden müssen.

Weiterhin wird noch darauf hingewiesen, dass es bei Wärmetauschern, deren einstückige Anschlusswasserkästen als Gussteile aus Metall ausgebildet waren, bekannt war, an den Aussenseiten der Wasserkästen ringförmige Nuten vorzusehen, die zur Aufnahme von geraden Enden von Wasserrohren ausgerichtet waren und die, wie im Falle der US-A 18 22 715, unter Zwischenschaltung einer ringförmigen Dichtungsscheibe oder, wie im Falle der GB-A 26 80 93, durch Einbringen eines geschmolzenen Lotmateriales abgedichtet mit den Wasserkästen verbunden wurden.

Im erstgenannten Fall musste durch Zuganker für die Aufrechterhaltung eines steten Anpressdruckes gesorgt werden und im zweitgenannten Fall musste der entsprechende Bereich des Wasserkastens und der Wasserrohre auf eine entsprechend hohe Temperatur erhitzt werden, die es dem geschmolzenen Lotmaterial unter Vorabzufuhr eines Flussmittels ermöglichte, eine metallische Verbindung zwischen den beiden Bauteilen herzustellen.

Die hierfür erforderliche hohe Temperatur in Verbindung mit besonderen, bei Lötverbindungen erforderlichen Flussmitteln ermöglichte hierbei ein Hochsaugen des geschmolzenen Lotmaterials sowohl an der Innen- als auch an der Aussenseite der in den ringförmigen Nuten angeordneten Wasserrohre.

Ein einfacher Materialaustausch, beim Wasserkasten – Kunststoff gegen Metall – und beim Verbindungsmaterial – geschmolzenes Lotmaterial gegen bei Raumtemperatur flüssiges Kunststoffklebermaterial – würde auch bei Benutzung der Ringnutenanordnung infolge der dem Kunststoff für Wasserkästen eigenen, eine Benetzung abweisenden, Eigenschaft sowie der dem Kunststoffklebermaterial eigenen Viskosität nicht zu einem Hochsteigen des aushärtbaren Kunststoffmaterials sowohl an der Innen- als auch an der Aussenseite der Wasserrohre führen.

Die Aufgabe der Erfindung ist es, einen Wärmetauscher der eingangs genannten Art derart zu verbessern, dass für die Herstellung der einstückigen Wasserkästen aus Kunststoff einfache Werkzeuge und wenig Material benötigt werden, die Länge der Abdichtungsfugen auf das unbedingt notwendige Minimum beschränkt bleibt und das aushärtbare Kunststoffmaterial in einfacher Weise einbringbar und in innige Verbindung sowohl mit der Innen- als auch der Aussenseite der Wasserrohrenden bringbar ist.

Gemäss der Erfindung wird diese Aufgabe gelöst, indem ein Wärmetauscher der eingangs genannten Art die in den Patentansprüchen aufgezeigten Merkmale aufweist.

Dadurch, dass die Aussenseite der Böden der Wasserkästen mit einer Vielzahl von Rohrstutzen versehen sind, die von im Abstand zu diesen angeordneten Ringstegen umfasst sind, wobei das aushärtbare Kunststoffmaterial in den zwischen den Rohrstutzen und den Ringstegen gebildeten, axial offenen Ringnuten angeordnet ist, in welches die auf die Rohrstutzen aufsteckbaren Rohrenden mit ihren ausgestellten Kragen einsenkbar sind, wird die Herstellung der einstückigen Wasserkästen aus Kunststoff mit einfachen Werkzeugen und wenig Material ermöglicht, die Länge der Abdichtungsfuge auf das unbedingt notwendige Minimum beschränkt und das Einbringen des aushärtbaren Kunststoffmaterials vereinfacht und dadurch, dass der Innendurchmesser der Rohrenden etwas grösser als der Aussendurchmesser der Rohrstutzen und der Aussendurchmesser der ausgestellten Kragen etwas kleiner als der Innendurchmesser der Ringstege ist, wird sichergestellt, dass das vor dem Aufstecken der Rohrenden bereits in den Ringnuten befindliche, aushärtbare Kunststoffmaterial die Rohrenden nicht nur aussen benetzt, sondern auch in den Raum zwischen den Rohrstutzen und der Innenwand der Rohrenden gedrückt wird, da der ausgestellte Kragen der Rohrstutzen eine Verteilerfunktion für das Kunststoffmaterial übernimmt und so dafür sorgt, dass ausreichend viel Kunststoffmaterial sowohl für die Verbindung der Rohrstutzen mit der Innenseite der Rohrenden als auch der Ringstege mit der Aussenseite der Rohrenden zur Verfügung steht. Auf diese Weise wird eine absolut dichte und zugfeste Befestigung des Rohrbündels aus Wasserrohren an den Wasserkästen aus Kunststoff erzielt.

Als aushärtbares Kunststoffmaterial hat sich hierbei ein Produkt der Firma Teroson unter der Bezeichnung Terokal 39 19 (eingetragenes Warenzeichen) als günstig erwiesen. Es weist eine gute Fliess- und Verteilfähigkeit auf und ist unter Erwärmung auf eine mässige Temperatur von etwa 140 bis 200 °C innerhalb einer geringen Zeitdauer von etwa zwei Minuten aushärtbar.

Der gemäss der Erfindung vorgeschlagene Aufbau eines Wärmetauschers kann selbstverständlich für alle möglichen bekannten Bauformen von Wärmetauschern entsprechend angewendet werden.

Es wird jedoch darauf hingewiesen, dass bei einer bestimmten bekannten Bauform eines Wärmetauschers durch den erfindungsgemässen Aufbau ein Minimum an Werkzeug-, Material- und Montagekosten erforderlich sind. Dies ist der Fall, wenn der Wärmetauscher, wie an sich bekannt, mit einem einzigen, in einen Vor- und einen Rücklaufraum unterteilten, einstückigen Wasserkasten (Anschlusswasserkasten) aus Kunststoff und einem von Luftleitlamellen zusammengehaltenen Rohrbündel von Wasserrohren aus Metall besteht, wobei die Wasserrohre in an sich bekannter Weise vom Vorlaufraum ausgehend und zum Rücklaufraum zurückkehrend U-förmig verlaufend ausgebildet sind. Die bei dieser Bauform eines Wärmetauschers bekannten Vorteile werden durch den erfindungsgemässen Aufbau noch dadurch ergänzt, dass die zur Herstellung eines solchen Wärmetauschers erforderlichen Verfahrensschritte wesentlich vereinfacht werden.

Die Erfindung wird anhand zweier in den beiliegenden Zeichnungen gezeigter Ausführungsformen von Wärmetauschern näher erläutert. Es zeigt

Fig. 1 eine Seitenansicht eines sehr kompakt bauenden Wärmetauschers gemäss der Erfindung;

Fig. 2 eine Ansicht in Richtung des Pfeiles II in Fig. 1;

Fig. 3 einen Schnitt entlang der Linie III–III in Fig. 1;

Fig. 4 eine Ansicht in Richtung des Pfeiles IV in Fig. 3;

Fig. 5 einen Schnitt entlang der Linie V–V in Fig. 1;

Fig. 6 eine Ansicht in Richtung des Pfeiles VI in Fig. 5;

Fig. 7 eine Seitenansicht eines sehr einfach bauenden Wärmetauschers gemäss der Erfindung;

Fig. 8 eine Ansicht in Richtung des Pfeiles VIII in Fig. 7;

Fig. 9 einen Schnitt entlang der Linie IX–IX in Fig. 7 und

Fig. 10 eine Ansicht in Richtung des Pfeiles X in Fig. 9.

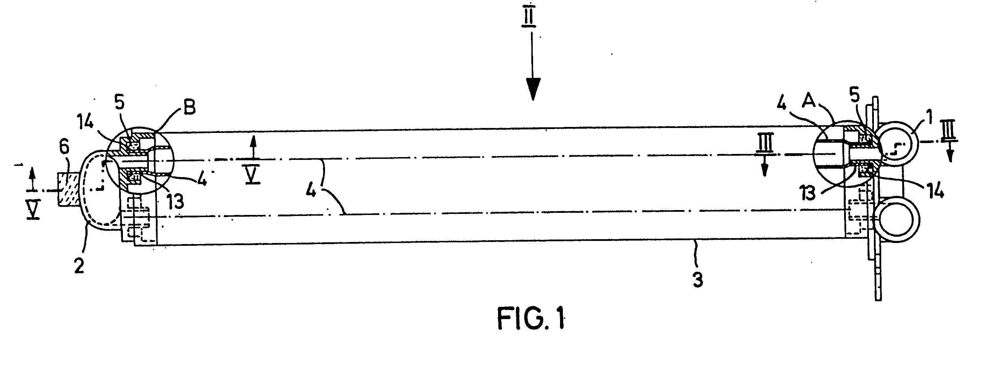

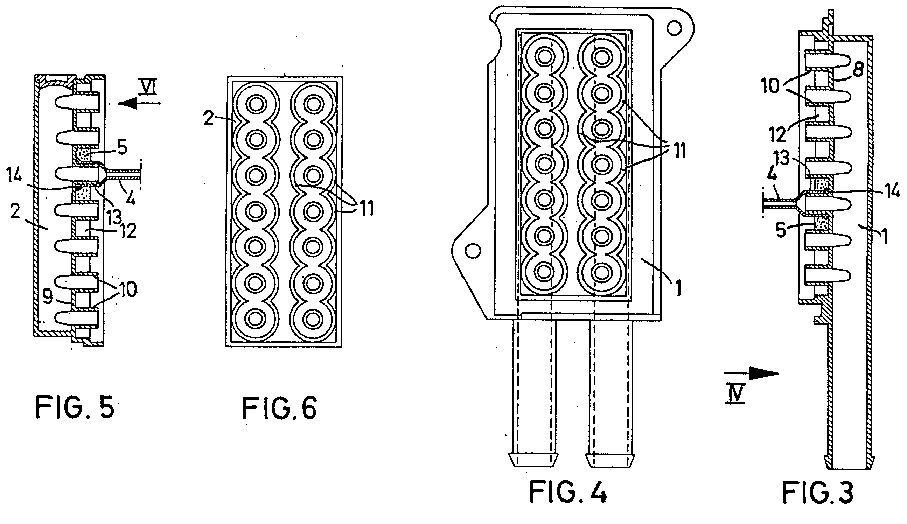

Die in den Figuren 1 bis 6 gezeigte Ausführungsform eines sehr kompakt bauenden Wärmetauschers besteht im wesentlichen aus einem einstückig aus Kunststoff hergestellten Anschlusswasserkasten 1 mit einer Unterteilung in einen Vor- und einen Rücklaufraum und entsprechend angeformten Zu- und Ablaufstutzen und einem Umlenkwasserkasten 2, die miteinander über ein durch Luftleitlamellen 3 aus Aluminium zusammengehaltenes Rohrbündel von Wasserrohren 4 aus Metall und ein die Rohrenden einbettendes, aushärtbares Kunststoffmaterial 5 abgedichtet verbunden sind. Eine den Wärmetauscher an seinem Umfang umfassende Schaumstoffdichtung 6 dient zum Beispiel zur Anordnung des Wärmetauschers in einem Heizungsgehäuse eines Kraftfahrzeuges.

Die einstückig aus Kunststoff hergestellten Wasserkästen 1 und 2 sind an den Aussenseiten ihrer ebenen Böden 8 und 9 mit einer der Anzahl der Wasserrohre 4 entsprechenden Anzahl von hochragenden Rohrstutzen 10 versehen, die von im Abstand hierzu verlaufenden Ringstegen 11 umfasst werden. In die auf diese Weise zwischen den Rohrstutzen 10 und den Ringstegen 11 gebildeten axial offenen Ringnuten 12, die vorzugsweise einander übergreifend oder ineinanderlaufend ausgebildet sind, ist das aushärtbare Kunststoffmaterial 5, zum Beispiel Terokal 39 19 (eingetragenes Warenzeichen) der Firma Teroson, über eine entsprechende Verteilvorrichtung einbringbar.

Die Wasserrohre 4 aus Metall sind bei dieser Ausführungsform als Flachrohre ausgebildet, auf die eine Vielzahl von Luftleitlamellen 3 aus Aluminium aufgesteckt und nachfolgend durch Aufweiten der Rohre unter Innendruck festgelegt werden.

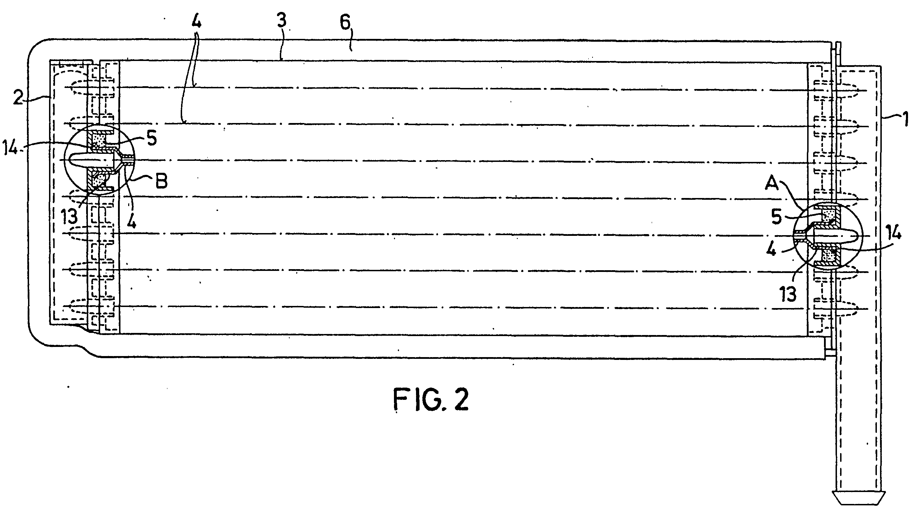

Gleichzeitig mit dem Aufweiten der flachen Wasserrohre 4 unter Innendruck werden die Rohre an ihren Rohrenden 13 über entsprechende Dorne aufgeweitet und mit einem ausgestellten Kragen 14 versehen. Die aufgeweiteten Rohrenden 13 und die ausgestellten Kragen 14 sind in den Figuren 1 und 2 in den in den Kreisen A und B herausgestellten Details gezeigt.

Der Innendurchmesser der aufgeweiteten Rohrenden 13 wird hierbei etwas grösser als der Aussendurchmesser der Rohrstutzen 10 ausgeführt und der Aussendurchmesser der ausgestellten Kragen 14 wird etwas kleiner als der Innendurchmesser der Ringstege 11 ausgeführt.

Dadurch wird sichergestellt, dass das in die Ringnuten 12 eingebrachte aushärtbare Kunststoffmaterial 5 beim Aufstecken der Rohrenden 13 auf die Rohrstutzen 10 sowohl an der Inneseite als auch an der Aussenseite der Rohrenden 13 hochsteigt und so für eine dichte und feste Verbindung der Wasserrohre 4 in den Wasserkästen 1 und 2 sorgen kann.

Die Herstellung des beschriebenen Wärmetauschers umfasst hierbei die folgenden, zum Teil an sich bekannten Verfahrensschritte:

a) Herstellen der beiden einstückigen Wasserkästen 1 und 2 aus Kunststoff im Spritzguss- oder Blasverfahren;

b) Herstellen des Rohrbündels durch Ablängen der Wasserrohre 4, Aufsetzen der Luftleitlamellen 3 und Aufweiten der Wasserrohre 4 unter Innendruck bei gleichzeitigem Aufweiten der Rohrenden 13 und Herstellen der ausgestellten Kragen 14 über entsprechende Dorne.

c) Einbringen des aushärtbaren Kunststoffmaterials 5 in die axial offenen Ringnuten 12 der mit den Böden 8 und 9 nach oben liegenden Wasserkästen 1 und 2;

d) Anordnen des Rohrbündels zwischen den beiden Wasserkästen 1 und 2, Kippen der Wasserkästen 1 und 2 um 90° und Aufschieben auf das Rohrbündel, wobei die aufgeweiteten Rohrenden 13 auf die Rohrstutzen 10 aufgesteckt und die ausgestellten Kragen 14 in das Kunststoffmaterial 5 eingesenkt werden;

e) Fixieren dieser Anordnung (zum Beispiel über entsprechende Vorrichtungen) und Erwärmen der Verbindungsbereiche auf etwa 140 bis 200 °C über einen Zeitraum von ca. 2 Minuten.

Zur Erläuterung dieser Verfahrensschritte wird darauf hingewiesen, dass bei dem erforderlichen Kippen der Wasserkästen 1 und 2 um 90° kein Auslaufen des fliessfähigen Kunststoffmaterials 5 zu befürchten ist, da die Lage der angrenzenden Luftleitlamellen 3 so gewählt ist, dass diese nach dem Zusammenfügen der Wasserkästen mit dem Rohrbündel die axial offenen Ringnuten 12 praktisch abschliessen. Für die kurze Zeit bis zum darauffolgenden Aushärten des Kunststoffmaterials ist diese Dichtwirkung ausreichend.

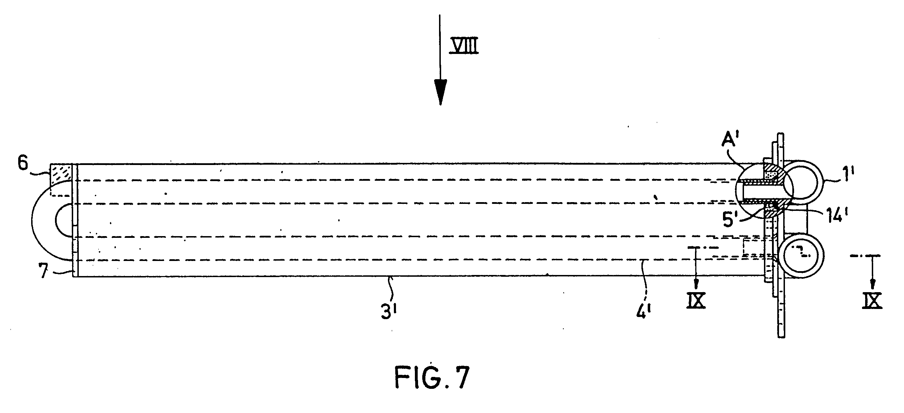

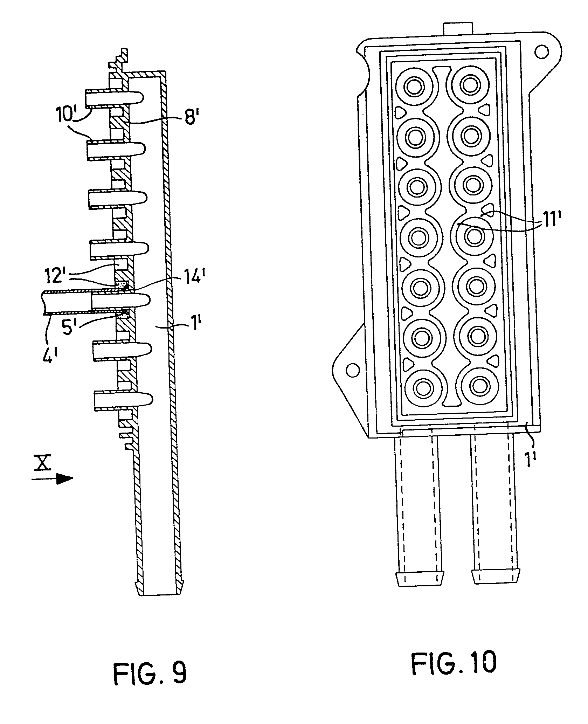

Die in den Figuren 7 bis 10 gezeigte Ausführungsform eines sehr einfach bauenden Wärmetauschers besteht im wesentlichen aus den gleichen Bauteilen wie der Wärmetauscher nach den Figuren 1 bis 6, so dass für gleiche oder ähnliche Bauteile die gleichen, nur mit einem Index versehenen Bezugszeichen verwendet werden.

Die in den Figuren 7 bis 10 gezeigte Ausführungsform eines Wärmetauschers weist in an sich bekannter Weise einen einzigen, einstückig aus Kunststoff hergestellten Anschlusswasserkasten 1' auf, der mit einem durch Luftleitlamellen 3' aus Aluminium zusammengehaltenen Rohrbündel von Wasserrohren 4' aus Metall über ein die Rohrenden einbettendes, aushärtbares Kunststoffmaterial 5' abgedichtet verbunden ist. Die Wasserrohre 4' sind hierbei in an sich bekannter Weise vom Vorlaufraum ausgehend und zum Rücklaufraum zurückkehrend U-förmig verlaufend ausgebildet. Die Wasserrohre 4' sind hierbei an ihren U-Bögen über eine Endplatte 7 festgelegt. Eine den Wärmetauscher umfassende Schaumstoffdichtung 6 dient wieder zur Anordnung des Wärmetauschers, zum Beispiel in einem Heizungsgehäuse eines Kraftfahrzeuges.

Der einzige, einstückig aus Kunststoff hergestellte Wasserkasten 1' ist hierbei ähnlich wie in Zusammenhang mit den Figuren 1 bis 6 beschrieben, an der Aussenseite seines ebenen Bodens 8' mit einer der Anzahl der Rohrenden entsprechenden Anzahl von hochragenden Rohrstutzen 10' versehen, die von im Abstand hierzu verlaufenden Ringstegen 11' umfasst werden. In die auf diese Weise gebildeten, axial offenen Ringnuten 12', die vorzugsweise ineinander übergehend ausgebildet sind, ist das aushärtende Kunststoffmaterial 5, zum Beispiel Terokal 39 19 (eingetragenes Warenzeichen), der Firma Teroson über eine entsprechende Verteilvorrichtung einbringbar.

Die Wasserrohre 4' aus Metall sind bei dieser Ausführungsform des Wärmetauschers als normale Rundrohre ausgebildet, in denen zur Erhöhung der Strömungsverwirbelung schraubenförmige Verwirbelungsstreifen 15 eingelegt sein können. Die Vielzahl von Luftleitlamellen 3' aus Aluminium werden wieder in bekannter Weise auf die Wasserrohre 4' aufgesteckt und durch Aufweiten der Rohre unter Innendruck festgelegt.

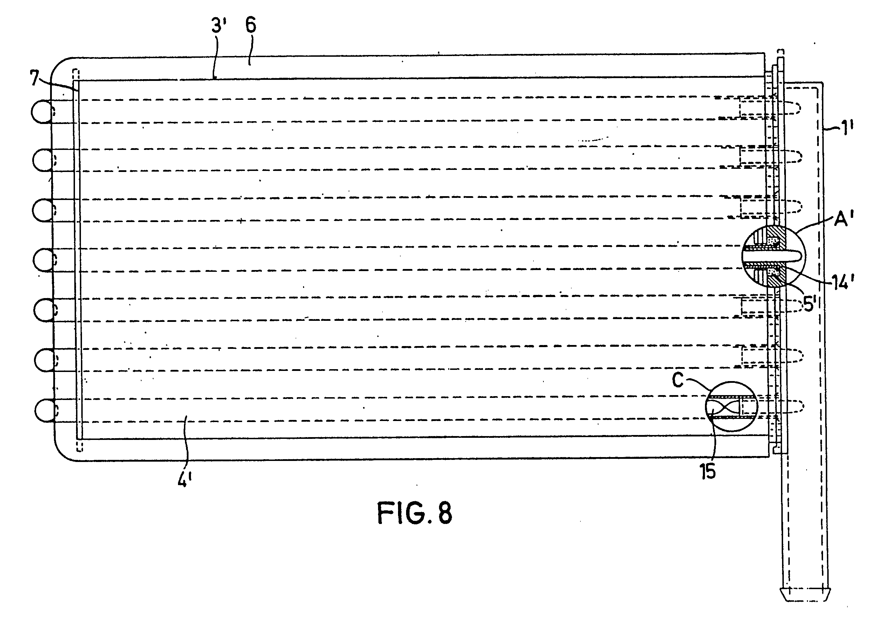

Gleichzeitig mit dem Aufweiten der Wasserrohre 4' unter Innendruck werden die Enden der Wasserrohre 4' über entsprechende Dorne mit ausgestellten Kragen 14' versehen. Die Ausbildung der Enden der Wasserrohre 4' ist hierbei aus den in den Figuren 7 und 8 in den Kreisen A' gezeigten Details zu ersehen.

Der Innendurchmesser der Wasserrohre 4' ist hierbei so gewählt, dass er etwas grösser als der Aussendurchmesser der Rohrstutzen 10' ist und der Aussendurchmesser der ausgestellten Kragen 14' ist so gewählt, dass er etwas kleiner als der Innendurchmesser der Ringstege 11' ist.

Dadurch wird wieder sichergestellt, dass die Wasserrohre 4' sowohl innen- als auch aussenseitig mit dem aushärtbaren Kunststoffmaterial 5' benetzt werden und für eine dichte und feste Verbindung zum Wasserkasten 1' sorgen.

Die Herstellung dieser Ausführungsform eines Wärmetauschers umfasst folgende zum Teil an sich bekannte Verfahrensschritte:

a) Herstellen des einzigen Wasserkastens 1' einstückig aus Kunststoff im Spritz- oder Blasverfahren;

b) Herstellen des Rohrbündels durch Ablängen und Biegen der Wasserrohre 4'. Aufsetzen der Luftleitlamellen 3' und Aufweiten der Rohre durch Innendruck unter gleichzeitigem Herstellen der ausgestellten Kragen 14' über entsprechende Dorne;

c) Einbringen des aushärtbaren Kunststoffmaterials 5' in die axial offenen Ringnuten 12' des mit dem Boden nach oben liegenden Wasserkastens 1';

d) Aufsetzen des Rohrbündels von oben auf den Wasserkasten 1', wobei die Rohrenden auf die Rohrstutzen 10 aufgesteckt und die ausgestellten Kragen 14' in das Kunststoffmaterial 5' eingesenkt werden;

e) Erwärmen der Verbindungsbereiche auf etwa 140 bis 200 °C über einen Zeitraum von cirka zwei Minuten.

Dadurch, dass hier die abzudichtenden Rohrenden auf einer Seite liegen, wird der Material- und Fertigungsaufwand auf ein Minimum beschränkt.

**Patentansprüche**

1. Wärmetauscher, insbesondere für Kraftfahrzeuge, mit einem in einen Vor- und Rücklauf-·raum unterteilten, einstückigen Anschlusswasserkasten (1) und gegebenenfalls einem einstückigen Umlenkwasserkasten (2) jeweils aus Kunststoff, die über ein von Luftleitlamellen (3) zusammengehaltenes Rohrbündel von Wasserrohren (4) aus Metall miteinander verbunden sind, deren Rohrenden über ein in die Rohröffnungen erweiternde, rillenförmige Vertiefungen an der Aussenseite der Böden der Wasserkästen eingebrachtes, aushärtbares Kunststoffmaterial abgedichtet befestigt sind, dadurch gekennzeichnet, dass die Aussenseiten der Böden (8, 9) der Wasserkästen (1, 2) mit einer Vielzahl von Rohrstutzen (10) versehen sind, die von im Abstand zu diesen angeordneten Ringstegen (11) umfasst sind, wobei das aushärtbare Kunststoffmaterial (5) in zwischen den Rohrstutzen (10) und den Ringstegen (11) gebildeten, axial offenen Ringnuten (12) angeordnet ist, in welches die auf die Rohrstutzen (10) aufgesteckten Rohrenden (13) mit ihren ausgestellten Kragen (14) eingesenkt sind, und dass der Innendurchmesser der Rohrenden (13) etwas grösser als der Aussendurchmesser der Rohrstutzen (10) und der Aussendurchmesser der ausgestellten Kragen (14) etwas kleiner als der Innendurchmesser der Ringstege (11) ist.

2. Wärmetauscher nach Anspruch 1, dadurch gekennzeichnet, dass das Kunststoffmaterial (5) bei Erwärmung auf etwa 140 bis 200 °C innerhalb von etwa zwei Minuten aushärtbar ist.

3. Wärmetauscher nach einem der Ansprüche 1 und 2, mit einem einzigen, in einen Vor- und einen Rücklaufraum unterteilten, einstückigen Wasserkasten (Anschlusswasserkasten 1') aus Kunststoff, der mit einem von Luftleitlamellen zusammengehaltenen Rohrbündel von Wasserrohren aus Metall über ein die Rohrenden einbettendes aushärtbares Kunststoffmaterial abgedichtet verbunden ist, dadurch gekennzeichnet, dass die Wasserrohre (4') in an sich bekannter Weise vom Vorlaufraum ausgehend und zum Rücklaufraum zurückkehrend U-förmig verlaufend ausgebildet sind.

4. Verfahren zur Herstellung eines Wärmetauschers nach einem der Anprüche 1 und 2, gekennzeichnet durch folgende zum Teil an sich bekannte Verfahrensschritte:

a) Herstellen der beiden einstückigen Wasserkästen (1, 2) aus Kunststoff im Spritz- oder Blasverfahren;

b) Herstellen des Rohrbündels durch Ablängen der Wasserrohre (4), Aufsetzen der Luftleitlamellen (3) und Aufweiten der Rohre durch Innendruck unter gleichzeitigem Aufweiten der Rohrenden (13) und Herstellen der ausgestellten Kragen (14) über entsprechende Dorne;

c) Einbringen des aushärtbaren Kunststoffmaterials (5) in die axial offenen Ringnuten (12) der mit den Böden (8, 9) nach oben liegenden Wasserkästen (1, 2);

d) Anordnen des Rohrbündels zwischen den beiden Wasserkästen (1, 2), Kippen der Wasserkästen (1, 2) um 90° und Aufschieben auf das Rohrbündel, wobei die Rohrenden (13) auf die Rohrstutzen (10) aufgesteckt und die ausgestellten Kragen (14) in das Kunststoffmaterial (5) eingesenkt werden;

e) Fixieren dieser Anordnung und Erwärmen der Verbindungsbereiche auf etwa 140 bis 200 °C über einen Zeitraum von cirka zwei Minuten.

5. Verfahren zur Herstellung eines Wärmetauschers nach Anspruch 3, gekennzeichnet durch folgende zum Teil an sich bekannte Verfahrensschritte:

a) Herstellen des einzigen einstückigen Wasserkastens (1') aus Kunststoff im Spritz- oder Blasverfahren;

b) Herstellen des Rohrbündels durch Ablängen und Biegen der Wasserrohre (4'), Aufsetzen der Luftleitlamellen (3') und Aufweiten der Rohre durch Innendruck unter gleichzeitigem Herstellen der ausgestellten Kragen (14') über entsprechende Dorne;

c) Einbringen des aushärtbaren Kunststoffmaterials (5') in die axial offenen Ringnuten (12') des mit dem Boden (8') nach oben liegenden Wasserkastens (1');

d) Aufsetzen des Rohrbündels auf den Wasserkasten (1'), wobei die Rohrenden auf die Rohrstutzen (10') aufgesteckt und die ausgestellten Kragen (14') in das Kunststoffmaterial (5') eingesenkt werden;

e) Erwärmen der Verbindungsbereiche auf etwa 140 bis 200°C über einen Zeitraum von cirka zwei Minuten.

## Revendications

1. Echangeur de chaleur, notamment pour véhicules, comportant une chambre d'entrée et une chambre de sortie des caissons de liaison à eau (1) monopièce et éventuellement un caisson de renvoi (2) en matière plastique, qui sont reliés par des tubes à eau (4) métalliques maintenus en faisceau tubulaire par des ailettes de refroidissement par air (3) dont les extrémités des tubes sont fixées de manière étanche par une matière plastique durcissable rapportée dans des rainures circulaires s'évasant dans les ouvertures des tubes, surl le côté extérieur des fonds des caissons, caractérisé en ce que les côtés extérieurs des fonds (8, 9) des caissons (1, 2) sont munis d'une multiplicité de tubulures de raccordement (10), qui sont entourées à une certaine distance de nervures annulaires (11), en ce que la matière plastique thermodurcissable est logée dans des rainures annulaires (12) ouvertes axialement et formées entre les appuis tubulaires (10) et les nervures annulaires (11), et dans celles-ci sont noyées par leurs collets (14) les extrémités des tubes (13) placées sur les appuis tubulaires (10) et en ce que le diamètre intérieur des extrémités des tubes (13) est sensiblement supérieur au diamètre extérieur des appuis tubulaires (10) et le diamètre extérieur des collets (14) est sensiblement inférieur au diamètre intérieur des nervures annulaires (11).

2. Echangeur selon la revendication 1, caractérisé en ce que la matière plastique (5) est durcie par chauffage à 140 à 200°C pendant deux minutes environ.

3. Echangeur selon l'une des revendications 1 et 2, comportant un seul caisson monopièce (caisson de liaison 1') en matière plastique divisé en une chambre d'entrée et une chambre de sortie, relié de manière étanche à un faisceau tubulaire métallique tenu par des ailettes de refroidissement par une matière plastique durcissable enrobant les extrémités des tubes, caractérisé en ce que, de façon connue en soi, les tubes (4') sont en forme d'U et partent de la chambre d'entrée pour retourner à la chambre de sortie.

4. Procédé pour la fabrication d'un échangeur de chaleur suivant l'une des revendications 1 à 3, caractérisé par les mesures suivantes, partiellement connues:

a) Fabrication des deux caissons collecteurs (1, 2), chacun en seule pièce et en matière plastique, par injection ou par soufflage;

b) Fabrication du faisceau tubulaire par coupe des tubes (4) à la longueur, montage des ailettes de refroidissement (3), dilatation des tubes par surpression interne avec formation des embouts (13) évasés et réalisation des collerettes (14) au moyen de poinçons adéquats;

c) Apport de la matière plastique durcissable (5) dans les rainures circulaires (12) ouvertes axialement et logées dans les fonds (8, 9) des caissons collecteurs (1, 2) tournés vers le haut;

d) Montage du faisceau tubulaire entre les deux caissons collecteurs (1, 2), basculement des caissons collecteurs (1, 2) de 90°, introduction des tubulures de raccordement (10) dans les embouts (13) du faisceau tubulaire et enfoncement des collerettes (14) dans la matière plastique (5);

e) Fixation de cet assemblage et chauffage de la région des raccords vers 140 à 200°C pendant une période de deux minutes environ.

5. Procédé pour la fabrication d'un échangeur de chaleur suivant la revendication 4, caractérisé par les mesures suivantes, partiellement connues:

a) Fabrication de l'unique caisson collecteur (1') en matière plastique par injection ou soufflage en une seule pièce;

b) Préparation du faisceau tubulaire par coupe et cintrage des tubes (4'), montage des ailettes de refroidissement (3') et dilatation des tubes par surpression interne avec réalisation des collerettes (14') au moyen de poinçon adéquats;

c) Apport de la matière plastique durcissable (5') dans les rainures circulaires (12'), ouvertes axialement et logées dans le fond (8') du caisson collecteur (1') tourné vers le haut;

d) Montage du faisceau tubulaire sur le caisson (1') avec introduction des tubulures de raccordement (10') dans les embouts des tubes avec enfoncement des collerettes (14') dans la matière plastique (5');

e) Chauffage de la région des raccords à 140 à 200°C pendant deux minutes environ.

## Claims

1. A heat exchanger, in particular for motor cars with a one-piece connector chamber (1) subdivided into an entrance chamber and a backflow chamber (2) and a onepiece header chamber, each possibly of synthetic material, which are connected one with the other via a nest of water pipes (4) of metal held together by airguiding fins (3), the ends of the pipes being sealable fixed via a hardenable synthetic material introduced into grooveshaped recesses on the outside of the bottoms of the water chambers flaring out into the pipe apertures, characterised in that the outsides of the bottoms (8, 9) of the water chambers (1, 2) are provided with a plurality of pipe sockets (10) surrounded at a distance from the latter by annular lands (11), the hardenable synthetic material (5) being disposed in the axially open annular grooves (12) formed between the pipe sockets (10) and the annular lands (11), into which material the ends (13) of the pipes, slided over the pipe sockets (10) are sunk with their salient collars (14) and whereby the inside diameter of the pipe ends (13) is slightly larger than the outside diameter of the pipe sockets (10) and the outside diameter of the salient collars (14) is slightly smaller than the inside diameter of the annular lands (11).

2. Heat exchanger according to claim 1, characterized in that the synthetic material (5) is hardenable within about two minutes when heated to about 140 to 200°C.

3. Heat exchanger according to any one of the claims 1 and 2, with a single one-piece water chamber (connector chamber 1′) of synthetic material, subdivided into an entrance chamber and a back-flow chamber, which is sealably connected via a hardenable synthetic material with a nest of water pipes of metal held together by air-guiding fins, the ends of the pipes being embedded in the hardenable synthetic material, characterized in that the water pipes (4′) run U-shaped starting from the entrance chamber and returning to the exit chamber in a manner known per se.

4. A method for the manufacture of a heat exchanger according to any one of claims 1 and 2, characterized by the following process steps, partially known per se:

a) Manufacture of the two one-piece water chambers (1, 2) from synthetic material by jet moulding or blow forming;

b) manufacture of the nest of pipes by cutting the water pipes (4) to length, fitting the air-guiding fins (3) and expanding the pipes by internal pressure, simultaneously expanding the pipe ends (13) and producing the salient collars (14) by suitable mandrels;

c) introduction of the hardenable synthetic material (5) into the axially open annular grooves (12) of the water chambers (1, 2) lying with the bottoms (8, 9) upward;

d) disposing the nest of pipes between the two water chambers (1, 2), tilting the water chambers (1, 2) by 90° and sliding them onto the nest of pipes, the pipe ends (13) being slid over the pipe sockets (10) and the salient collars (14) sunk into the synthetic material (5);

e) fixing this assembly and heating the junction regions to about 140 to 200°C for a period of about two minutes.

5. Method for the manufacture of a heat exchanger according to claim 3, characterized by the following process steps, partially known per se:

a) Manufacture of the single, one-piece water chamber (1′) from synthetic material by jet moulding or blow forming;

b) manufacture of the nest of pipes by cutting the water pipes (4′) to length and bending them, fitting the air-guiding fins (3′) and expanding the pipes by internal pressure, simultaneously producing the salient collars (14′) by suitable mandrels;

c) introduction of the hardenable synthetic material (5′) into the axially open annular grooves (12′) of the water chamber (1′), lying bottom (8′) upward;

d) mounting the nest of pipes on the water chamber (1′), the pipe ends being slid over the pipe sockets (10′) and the salient collars (14′) sunk into the synthetic material (5′);

e) heating the junction regions to about 140 to 200°C for a period of about two minutes.

FIG.1

EP 0 000 189 B2

FIG.2

EP 0 000 189 B2

FIG. 5

FIG.6

FIG. 4

FIG.3

EP 0 000 189 B2

FIG.7

FIG.8

FIG. 9

FIG. 10